# EUROPÄISCHE PATENTSCHRIFT

(11) **EP 2 537 663 B1**
(45) Veröffentlichungstag und Bekanntmachung des Hinweises auf die Patenterteilung: **25.07.2018**
(21) Anmeldenummer: 12173175.6
(22) Anmeldetag: 22.06.2012
(51) Int. Cl.: B29C 49/46, B29C 49/42, B29C 49/36, B29C 49/12

(54) **Vorrichtung und Verfahren zum Umformen von Kunststoffvorformlingen zu Kunststoffbehältnissen mit durch ein Wasserschloss geführter Luftabsaugung**
Device and method for reforming plastic pre-forms into plastic containers with air extraction guided through a surge tank
Dispositif et procédé de transformation d'ébauches en matière synthétique pour devenir des conteneurs en plastique avec une évacuation d'air guidée par chambre d'équilibre

(30) Priorität: 24.06.2011 DE 102011105745
(43) Veröffentlichungstag der Anmeldung: 26.12.2012
(73) Patentinhaber: Krones AG, 93073 Neutraubling (DE)
(72) Erfinder: Geltinger, Florian, 93093 Donaustauf (DE); Braun, Franz, 93053 Regensburg (DE); Kerim, Yasin, 86343 Königsbrunn (DE)
(74) Vertreter: Bittner, Bernhard

(56) Entgegenhaltungen:
- EP-A1- 2 388 129
- WO-A1-2009/047171
- WO-A2-2010/020529
- US-A- 4 880 581

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Üblicherweise weist eine derartige Vorrichtung zum Umformen von Kunststoffvorformlingen zu Kunststoffbehältnissen, im folgenden auch Streckblasmaschine genannt, mehrere Blasstationen auf, in denen die Vorformlinge durch Anlegen eines Innendrucks zu Kunststoffflaschen geblasen werden. Diese fertig geblasenen Kunststoffbehältnisse sind nach diesem Prozess verschmutzt und müssen hinterher aufwändig gereinigt werden, um bestimmte Hygienestandards einzuhalten. Aus dem Stand der Technik sind weiterhin solche Blasmaschinen bekannt, bei denen der Umformungsprozess innerhalb eines Reinraums stattfindet. Dies bedeutet, dass innerhalb dieses Sterilraums bzw. Reinraums die Kunststoffvorformlinge zu den Kunststoffbehältnissen umgeformt werden.

Aus der WO 2010/020529 A2, die den Oberbegriff des Anspruchs 1 offenbart, ist eine sterile Blasmaschine bekannt. Ein bedeutender Bestandteil derartiger Vorrichtungen ist dabei eine Dichtungseinrichtung, mit der der Reinraum gegenüber der Umgebung abgegrenzt wird. Aus dem Stand der Technik bekannt sind dabei sogenannte Wasserschlösser, welche einen umlaufenden Flüssigkeitskanal aufweisen, der beispielsweise stationär angeordnet ist, und demgegenüber eine Wandung des Reinraums bewegt wird, wobei diese Wandung in diesen Flüssigkeitskanal eintaucht und somit durch die in dem Kanal befindliche Flüssigkeit eine Abdichtung erreicht wird.

Ein weiteres Problem bei derartigen Maschinen ist jedoch, dass teilweise ein Gasaustausch zwischen Bereichen des Reinraums bzw. zwischen abgedichteten Bereichen der Maschine und der Umgebung stattfinden soll und dieser Gasaustausch möglichst kontrolliert bzw. auch unter aseptischen Bedingungen erfolgen soll. Durch das oben beschriebene Wasserschloss wird damit einerseits erreicht, dass eine Drehung möglich ist und andererseits kann das Gas nicht an der Flüssigkeitsbarriere entweichen. Damit bildet das Wasserschloss eine drehbare dichte Verbindung, bzw. ein eine hydraulische Dichtung bildendes Flüssigkeitsbad.

Der vorliegenden Erfindung liegt die Aufgabe zugrunde, eine Vorrichtung zu schaffen, welche trotz der durch das Wasserschloss bedingten Abdichtung auch eine prozesssichere Absaugung von Medien oder auch eine prozesssichere Zuführung von Medien und insbesondere gasförmigen Medien ermöglicht.

Dies wird erfindungsgemäß durch Vorrichtungen und Verfahren nach den unabhängigen Ansprüchen erreicht. Vorteilhafte Ausführungsformen und Weiterbildungen sind Gegenstand der Unteransprüche.

Eine Vorrichtung zum Umformen von Kunststoffvorformlingen zu Kunststoffbehältnissen weist wenigstens eine Blasstation auf, welche an einer um eine vorgegebene Drehachse drehbaren Transporteinrichtung angeordnet ist, wobei die Blasstation eine Blasform aufweist und diese Blasform einen Hohlraum ausbildet, in dessen Innerem die Kunststoffvorformlinge durch Beaufschlagung mit einem gasförmigen Medium zu den Kunststoffbehältnissen expandierbar sind. Weiterhin weist die Vorrichtung eine Beaufschlagungseinrichtung auf, welche die Kunststoffvorformlinge zu deren Expansion mit dem gasförmigen Medium beaufschlagt sowie einen Reinraum, der die Blasstation wenigstens teilweise umgibt, wobei dieser Reinraum mittels wenigstens zweier Wandungen, welche relativ zueinander beweglich sind, gegenüber einer Umgebung abgegrenzt ist und die Vorrichtung eine Dichtungseinrichtung aufweist, welche den Reinraum in einem Bereich der relativ zueinander beweglichen Wandungen gegenüber der Umgebung abgrenzt, wobei die Dichtungseinrichtung einen ersten umlaufenden mit einem Flüssigkeit befüllbaren Kanal aufweist sowie einen gegenüber diesem Kanal ersten umlaufenden Wandungskörper, der zumindest abschnittsweise innerhalb des flüssigen Mediums führbar ist.

Dieser befüllbare Kanal kann dabei fest bzw. zumindest abdichtend mit der ersten Wandung verbunden sein und der umlaufende Wandungskörper entsprechend fest bzw. abdichtend mit der zweiten Wandung. Damit ist vorteilhaft der umlaufende Wandungskörper ringförmig ausgebildet und besonders bevorzugt ist auch der Kanal ringförmig ausgebildet. Erfindungsgemäß erstreckt sich in einem Abschnitt des Kanals eine Leitung für ein fließfähiges Medium, wobei dieses fließfähige Medium durch diesen Abschnitt des Kanals führbar ist und permanent von dem in dem Kanal befindlichen Medium getrennt ist. Bei der Leitung kann es sich um ein Leitungselement wie eine Rohrleitung handeln, es wird jedoch unter Leitung jegliche Einrichtung verstanden, die zum Weiterleiten des fließfähigen Mediums geeignet ist. So kann die Leitung auch durch Wandungen des Kanals ausgebildet sein, oder auch teilweise durch Wandungen des Kanals ausgebildet sein. Im weiteren Sinne handelt es daher bei der Leitung um ein Führungsmittel für das fließfähige Medium.

Es wird daher vorgeschlagen, dass die Vorrichtung einerseits durch das oben beschriebene Wasserschloss gegenüber der Umgebung abgedichtet ist, andererseits jedoch dieses Wasserschloss auch dazu dient, um kontrolliert bzw. abgedichtet einen Austausch eines fließfähigen Mediums und insbesondere einen Gasaustausch mit einem inneren Bereich der Vorrichtung, d.h. einem an sich abgedichteten Bereich der Vorrichtung zu ermöglichen. Damit baut die Erfindung auf dem oben beschriebenen Wasserschloss auf. So kann beispielsweise eine aseptische Blasstation, die auf einem rotierten Karussell montiert ist, vorgesehen sein. Der durch die Lüftungstechnik resultierende Kreislauf, beispielsweise in der Reckeinheit, weist vorteilhaft eine Absaugung von dem rotierenden Teil, auf dem die Blasstation angeordnet ist, auf das stehende Teil der Maschine auf. Diese aktive Absaugung kann, wie erwähnt, durch die nunmehr beschriebene Anordnung des modifizierten Wasserschlosses vorgenommen werden. Erfindungsgemäß weist die Vorrichtung einen zweiten gegenüber dem Kanal bewegbaren Wandungskörper auf, der von dem ersten Wandungskörper in einer bezüglich der Drehachse radialen Richtung beabstandet ist und der zumindest abschnittsweise innerhalb des flüssigen Mediums führbar ist.

Im Gegensatz zum Stand der Technik ist daher nicht nur ein sogenanntes Schwert vorgesehen, welches sich in dem Flüssigkeitskanal bewegt, sondern ein zweites Schwert und die Absaugung erfolgt vorteilhaft zwischen diesen beiden Schwertern und damit in einem sowohl gegenüber dem Innenraum des Wasserschlosses, als auch gegenüber der Umgebung abgedichteten Bereich.

Bei einer weiteren vorteilhaften Ausführungsform verläuft die Leitung für das fließfähige Medium daher wenigstens abschnittsweise in der bezüglich der Drehachse radialen Richtung zwischen dem ersten Wandungskörper und dem zweiten Wandungskörper.

Bei einer bevorzugten Ausführungsform mündet die Leitung in einen Sammel- bzw. Verteilkanal, der bevorzugt als Ringkanal ausgebildet ist und aus dem bevorzugt das gasförmige Medium abgesaugt wird. Auch wäre es möglich, dass über diesen Sammel- bzw. Verteilkanal das gasförmige Medium zugeführt wird. Dabei wäre es auch möglich, dass in dem Kanal des Wasserschlosses lediglich Öffnungen vorgesehen sind, welche die Strömungsverbindung mit dem besagten Sammel- bzw. Verteilkanal herstellen.

Bei einer weiteren vorteilhaften Ausführungsform befinden sich in dem Kanal mindestens zwei Öffnungen, die zueinander unterschiedlich große Querschnitte aufweisen. Dabei können die Querschnitte dieser Öffnungen abhängig von deren Abstand zu einem Absaugpunkt (bzw. Zuführpunkt) des Sammel- bzw. Verteilkanals sein, wobei bevorzugt der Querschnitt mit steigendem Abstand ebenfalls ansteigt.

Bei einer weiteren vorteilhaften Ausführungsform weist die besagte Leitung eine Öffnung auf und diese Öffnung ist in einem Arbeitsbetrieb der Vorrichtung permanent oberhalb des Füllstands des flüssigen Mediums angeordnet. Auf diese Weise kann verhindert werden, dass das Trenn- bzw. Sperrmedium des Wasserschlosses in die besagte Leitung gelangen kann. Die besagte Öffnung kann dabei rohrförmig ausgebildet sein. So kann sich ein oder auch mehrere Rohre durch den Kanal hindurch erstrecken. Es wäre jedoch auch möglich, dass die Öffnung, wie der Kanal, umlaufend ausgebildet ist bzw. auch durch zwei Wandungen des Kanals ausgebildet ist. Vorteilhaft sind mehrere Rohre mit besonders bevorzugt zumindest teilweise unterschiedlich großen Durchmessern über den Umfang der Vorrichtung angeordnet. Diese leiten das gasförmige Medium bevorzugt in einen Ringkanal, welcher als Sammelbehälter dient. Aus diesem kann dann an einem oder an mehreren Absaugpunkten das gasförmige Medium abgesaugt werden. Die unterschiedlichen Durchmesser der Rohre resultieren aus den verschieden großen Abständen zu dem jeweiligen Absaugpunkt. Vorteilhaft ist, dass durch jedes Loch abhängig von seiner Größe bzw. dem Abstand zum Absaugpunkt gleich viel Luft strömen kann.

Besonders bevorzugt dient die besagte Leitung zur Absaugung eines gasförmigen Mediums aus einem Bereich der Vorrichtung. Insbesondere dient die Leitung zur Absaugung eines gasförmigen Mediums aus einem Bereich des Reinraums oder der Reckstange. Dabei kann diese Absaugung durch einen Unterdruck erfolgen, wobei dieser Unterdruck beispielsweise in einem Bereich zwischen -1 und -10 Pa, bevorzugt zwischen -2 und -8 Pa und besonders bevorzugt einen Bereich von ca. -5 Pa gegenüber der Atmosphäre liegt.

Eine wichtige Komponente einer derartigen Streckblasmaschine beziehungsweise einer Blasstation ist die Reckeinheit. Diese lagert und führt die Reckstange. Die Reckstange fährt in den Kunststoffvorformling ein und reckt ihn bis zum Formboden aus. Der Blasdruck formt endgültig die Flasche und die Reckeinheit fährt die Reckstange wieder aus der fertigen Flasche zurück.

Aus dem Stand der Technik ist es bekannt, dass die Reckeinheit an einer Linearführung über einen Momentenschlitten beziehungsweise Reckschlitten verbunden und geführt ist. Dies ist bedeutsam, da die Reckstange üblicherweise über einen sehr langen Hub, der bis zu 450 mm reicht, sehr genau zentrisch geführt werden muss. Der Reckschlitten wird dabei in seiner bekannten Ausgestaltung von einem Linearmotor angetrieben. Dieser ist zentrisch zur Reckachse gelagert und fährt mit einer sehr hohen Geschwindigkeit aus und ein.

Auch ist es bekannt, dass die Reckstangen über eine Führungskurve bewegt werden.

Im Stand der Technik ist die Mechanik in einem unreinen Raum ohne jeglichen Schutz vor Verschmutzungen. Dies bedeutet, dass die fertig geformte Flasche verschmutzt ist und daher in einem eigenen Modul, wie einem Rinser hygienisch gereinigt werden muss.

Derzeit sind keine Streckblasmaschinen bekannt, welche Kunststoffflaschen produzieren, die aseptisch geblasen werden. Die Mechanik und der "unreine Ablauf" des Reckprozesses sind bei allen aktuellen Maschinen auf dem Markt ähnlich.

Bevorzugt weist die Vorrichtung eine Reckeinheit auf, welche die Kunststoffvorformlinge entlang deren Längsrichtung dehnt. Dabei weist die Reckeinheit eine gegenüber den Kunststoffvorformlingen bewegbare Reckstange auf, die in die Kunststoffvorformlinge einführbar ist und die Reckeinheit weist weiterhin eine Antriebseinrichtung zum Bewegen der Reckstange entlang deren Längsrichtung auf.

Vorteilhaft weist die Blasstation einen Aufnahmeraum mit wenigstens einer Wandung zum Aufnehmen der Reckstange auf, und die Reckstange ist gegenüber diesem Aufnahmeraum beweglich, wobei die Antriebseinrichtung vorteilhaft wenigstens zeitweise außerhalb dieses Aufnahmeraums angeordnet ist und wobei in diesem Aufnahmeraum ein gasförmiges Medium mit einem vorgegebenen Druck P aufnehmbar ist, der oberhalb eines Umgebungsdrucks in einer unsterilen Umgebung dieses Aufnahmeraums liegt. Vorteilhaft ist in dem Aufnahmeraum ein steriles Medium und insbesondere Sterilluft angeordnet.

Bei der Antriebseinrichtung zum Bewegen der Reckstange kann es sich beispielsweise um einen Linearmotor beziehungsweise Elektromotor oder einen mechanischen oder hydraulischen Antrieb handeln. Es wäre jedoch auch möglich, dass der Antrieb der Reckstange über eine Kurvenrolle und eine entsprechende insbesondere stationär angeordnete Führungskurve erfolgt. Diese Führungskurve kann dabei beispielswiese außerhalb des Reinraums angeordnet sein. Bei der Transporteinrichtung, welche die Blasstation beziehungsweise die Blasform transportiert, kann es sich beispielsweise um ein drehbar angeordnetes Blasrad handeln, an dem eine Vielzahl derartiger Blasstationen angeordnet ist. Vorteilhaft ist auch die Beaufschlagungseinrichtung innerhalb des Reinraums angeordnet und vorteilhaft gegenüber den zu expandierenden Behältnissen bewegbar.

Vorteilhaft steht der Aufnahmeraum in Strömungsverbindung mit der oben erwähnten Leitung für das fließfähige Medium. Damit erfolgt bevorzugt die Absaugung von Luft aus dem Aufnahmeraum über das oben erwähnte Wasserschloss. Dies hat sich als besonders vorteilhaft erwiesen, da hier trotz der Absaugung dieses gasförmigen Mediums von einem drehenden Teil der Maschine zu einem stehenden Teil der Maschine die sterilen Bedingungen aufrechterhalten werden können.

Es wäre jedoch auch möglich, die erwähnte Leitung, welche durch das Wasserschloss geführt wird, auch zur Zuführung eines gasförmigen Mediums zu verwenden, beispielsweise, um innerhalb des Reinraumes einen Überdruck zu ermöglichen. So könnte auch durch diese Leitung hindurch von außen nach innen, d.h. in den Reinraum Sterilluft zugeführt werden.

Bei einer weiteren vorteilhaften Ausführungsform ist die Reckstange an einer Halteeinrichtung angeordnet und diese Halteeinrichtung erstreckt sich durch eine Wandung des Aufnahmeraums hindurch. Über die Halteeinrichtung kann dabei die Reckstange mit der Antriebseinrichtung wie beispielsweise einem Schlittenelement oder dergleichen in Verbindung stehen. Es wird daher vorgeschlagen, dass die Reckstange von dem verschmutzten Umfeld so getrennt wird, dass sie mit keinen Keimen oder anderen Verschmutzungen in Berührung kommen kann.

Weiterhin wird erfindungsgemäß gleichwohl eine leichte Zugänglichkeit bei der zyklischen Reinigung der hygienischen Einheiten ermöglicht. Mittels der erfinderischen Vorrichtung ist es möglich, die Kunststoffvorformlinge hygienisch zu verformen.

Bei einer weiteren vorteilhaften Ausführungsform erstreckt sich die gesamte Halteeinrichtung durch eine in der Wandung des Aufnahmeraums gebildete Öffnung. Diese Öffnung kann dabei beispielsweise schlitzförmig ausgebildet sein. So ist es möglich, dass der Aufnahmeraum die Reckstange vollumfänglich mit Ausnahme des besagten Schlitzes umgibt. So kann der Aufnahmeraum beispielsweise zylinderförmig mit dem besagten Schlitz ausgebildet sein. Weiterhin wäre es möglich, dass eine Abdichteinrichtung vorgesehen ist, welche den Schlitz in denjenigen Bereichen, in denen die Halteeinrichtung nicht angeordnet ist, jeweils abdichtet. Dabei kann es sich um eine gleitende Dichtung handeln, welche jeweils diejenigen Bereiche abdichtet, in denen die besagte Halteeinrichtung nicht vorliegt beziehungsweise angeordnet ist.

Bei einer weiteren vorteilhaften Ausführungsform weist die Vorrichtung einen mittels wenigstens einer Wandung gegenüber der Umgebung abgetrennten Übergangsraum auf, wobei dieser Übergangsraum in Strömungsverbindung mit dem oben erwähnten Aufnahmeraum steht. So ist es beispielsweise möglich, dass die Reckstange in dem Aufnahmeraum beziehungsweise einer Kammer verläuft, welche mit steriler Luft beaufschlagt ist. Der Druck in diesem Aufnahmeraum ist dabei höher als der Luftdruck der unsterilen Umgebung. So kann dieser höhere sterile Druck aus einer Atmosphäre resultieren, die auch dazu dient, um die darunter angeordneten Blasformen mit steriler Luft zu versorgen.

An der besagten Kammer beziehungsweise dem Aufnahmeraum kann eine zweite Kammer, der oben erwähnte Übergangsraum, angebracht sein. In diesem Übergangsraum herrscht bevorzugt ein niedrigerer Druck als in dem Aufnahmeraum und der unsterilen Umgebungsluft. Diese beiden Kammern, d.h. der Aufnahmeraum und der Übergangsraum sind dabei vorzugsweise mit einem gemeinsamen einseitig durchgehenden Schlitz, durch den die sterile Luft von dem Aufnahmeraum zu dem Übergangsraum strömen kann, verbunden. Der Übergangsraum weist zusätzlich vorteilhaft einen weiteren Schlitz auf, der bevorzugt offen zur Atmosphäre hinführt.

Durch die beiden erwähnten Schlitze und den Unterdruck in dem Übergangsraum ergibt sich eine Strömungsbewegung in Richtung des Übergangsraums. Eine ständige Bewegung der Luft von dem Aufnahmeraum zu dem Übergangsraum verhindert eine Kontamination der Reckstange. Die ständig bewegte Luft von der unreinen Atmosphäre zu dem Übergangsraum verhindert weiterhin ein Austreten von mit Wasserstoffperoxid angereicherter Luft in die Atmosphäre. Eine derartige Anordnung kann auch als Absaugorgel bezeichnet werden.

Damit ist vorteilhaft der Druck in den Übergangsraum geringer als in der Umgebung sowie dem Aufnahmeraum, sodass der insgesamt niedrigste Druck in dem besagten Übergangsraum herrscht.

Vorteilhaft sind auch die beiden Schlitze beziehungsweise Öffnungen und des Aufnahmeraums und des Übergangsraums derart angeordnet, dass sie sich entgegen der Bewegungsrichtung der Blasstationen befinden, so dass ein direktes Einleiten von Keimen in den Aufnahmeraum verhindert wird.

Bei einer weiteren vorteilhaften Ausführungsform ist zwischen dem Aufnahmeraum und dem Übergangsraum eine Wandung angeordnet.

Wie oben erwähnt, kann die Reckstange über ein so genanntes Reckschwert, d.h. die Halteeinrichtung gehalten werden und läuft innerhalb dieses Aufnahmeraums. Die Halteeinrichtung beziehungsweise das Reckschwert kann von einem Linearmotor angetrieben werden und ragt vorteilhaft durch die beiden oben erwähnten Schlitze hindurch und ist besonders bevorzugt in der horizontalen Ebene verstellbar gelagert. Durch diese Anordnung verläuft die Reckstange nur in der sterilen Zone und bleibt daher aseptisch rein.

Vorteilhaft ist in entsprechender Weise zu diesem Reckschwert beziehungsweise der Halteeinrichtung auch der Blasschlitten aufgebaut. An diesem Blasschlitten kann die Blasdüse angeordnet sein, die ebenfalls zum Expandieren der Kunststoffvorformlinge auf diese aufgesetzt wird. Der Blasschlitten wird bevorzugt unterhalb der Reckstange vorteilhaft an derselben Linearführung geführt. Ein entsprechendes Schwert des Blasschlittens reicht vorteilhaft ebenfalls durch den Aufnahmeraum besonders bevorzugt auch durch den Übergangsraum.

Auch ist es möglich, dass ein entsprechendes Schwert- oder beziehungsweise eine Halteeinrichtung des Blasschlittens über die beiden oben erwähnten schlitzförmigen Öffnungen geführt wird. In der sterilen Umgebung des Aufnahmeraums ist der Blasschlitten mit dem Blaskolben verbunden und bewegt sich wie die oben erwähnte Halteeinrichtung beziehungsweise das Reckschwert innerhalb der Absaugorgel. Der Blaskolben wird vorteilhaft über den besagten Blasschlitten beziehungsweise eine stationär gelagerte Kurve angehoben. Bei einer weiteren vorteilhaften Ausführungsform steht der Aufnahmeraum in Strömungsverbindung mit dem Reinraum. Weiterhin ist bevorzugt eine Absaugeinrichtung vorgesehen, um ein gasförmiges Medium aus dem Übergangsraum abzusaugen. Dabei kann diese Absaugeinrichtung vorteilhaft das gasförmige Medium in die (unsterile) Umgebung führen. Die Absaugeinrichtung kann dabei eine Ventileinrichtung aufweisen.

Bei einer weiteren vorteilhaften Ausführungsform ist die Reckstange exzentrisch gegenüber dem Aufnahmeraum angeordnet. Dabei ist vorteilhaft vorgesehen, dass der Aufnahmeraum ein bestimmtes Mindestvolumen aufweist, um dessen Sterilität zu sichern. Die Reckstange ist demgegenüber vorteilhaft exzentrisch geführt, um sie auf diese Weise vergleichsweise nahe an der Öffnung des Aufnahmeraums anordnen zu können.

Bei einer vorteilhaften Ausführungsform ist der Aufnahmeraum im Wesentlichen zylinderförmig ausgebildet. Die Reckstange ist innerhalb dieses Zylinders geführt, wobei diese vorteilhaft exzentrisch bezüglich des Mittelpunkts des zylinderförmigen Aufnahmeraums angeordnet ist.

Die vorliegende Erfindung ist weiterhin auf ein Verfahren zum Umformen von Kunststoffvorformlingen zu Kunststoffbehältnissen gemäß Anspruch 12 gerichtet. Erfindungsgemäß erstreckt sich in wenigstens einem Abschnitt des Kanals eine Leitung von fließfähigem Medium, wobei dieses fließfähige Medium durch diesen Abschnitt des Kanals geführt ist und permanent von dem in dem Kanal befindlichen flüssigen Medium getrennt wird.

Vorteilhaft werden die Kunststoffvorformlinge mittels einer Reckstange in ihrer Längsrichtung gedehnt, wobei die Reckstange gegenüber den Kunststoffvorformlingen in der Längsrichtung bewegt wird.

Vorteilhaft wird die Reckstange innerhalb eines Aufnahmeraums bewegt. Dieser Aufnahmeraum ist gegenüber einer unsterilen Umgebung mittels wenigstens einer Wandung abgetrennt. Weiterhin wird der Aufnahmeraum mit einem gasförmigen Medium beaufschlagt und ein Druck dieses gasförmigen Mediums innerhalb des Aufnahmeraums ist höher als Umgebungsdruck in einer unsterilen Umgebung. Vorteilhaft werden die Kunststoffvorformlinge mit Sterilluft beaufschlagt.

Bei einem bevorzugten Verfahren wird zum Bewegen der Reckstange gegenüber dem Kunststoffvorformling eine Halteeinrichtung, an der die Reckstange angeordnet ist und die sich bevorzugt durch eine Öffnung des Aufnahmeraums hindurch erstreckt gegenüber dem Aufnahmeraum bewegt. Vorteilhaft ist daher der Aufnahmeraum fest gegenüber der Transporteinrichtung und vorteilhaft auch in der Längsrichtung der Kunststoffvorformlinge fest gegenüber den einzelnen Blasstationen angeordnet. Vorteilhaft ist dabei die Reckstange fest an der besagten Halteeinrichtung angeordnet.

Weitere Vorteile und Ausführungsformen ergeben sich aus den beigefügten Zeichnungen. Darin zeigen:
- Fig. 1: eine schematische Darstellung einer Anlage zum Herstellen von Kunststoffbehältnissen;
- Fig. 2: eine Ansicht eines Reinraums im Bereich einer Blasstation,
- Fig. 3: eine Darstellung einer Reckeinheit nach dem internen Stand der Technik der Anmelderin;
- Fig. 4: eine Draufsicht auf eine vorteilhafte Reckeinheit;
- Fig. 5: eine Seitenansicht der Reckeinheit aus Fig. 4;
- Fig. 6: eine perspektivische Ansicht der in Fig. 5 gezeigten Reckeinheit;
- Fig. 7: eine schematische Darstellung einer erfindungsgemäßen Reckeinheit;
- Fig. 8a, 8b: 2 perspektivische Darstellungen einer erfindungsgemäßen Reckeinheit;
- Fig. 9: eine schematische Darstellung zur Veranschaulichung einer Dichtung;
- Fig. 10: eine Darstellung einer Vorrichtung zur Veranschaulichung der Erfindung;
- Fig. 11: eine vergrößerte Ansicht der in Fig. 10 gezeigten Vorrichtung; und
- Fig. 12: eine Ansicht auf eine weitere Ausführungsform der erfindungsgemäßen Vorrichtung; und
- Fig. 13: eine Draufsicht auf die Vorrichtung aus Fig. 12.

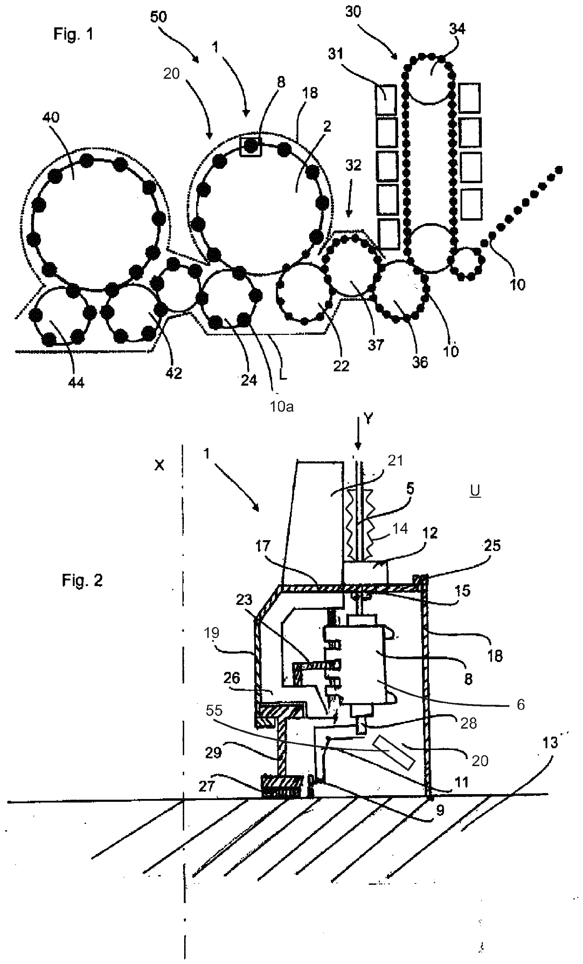

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 nach dem Stand der Technik im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg 14 vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen oder ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

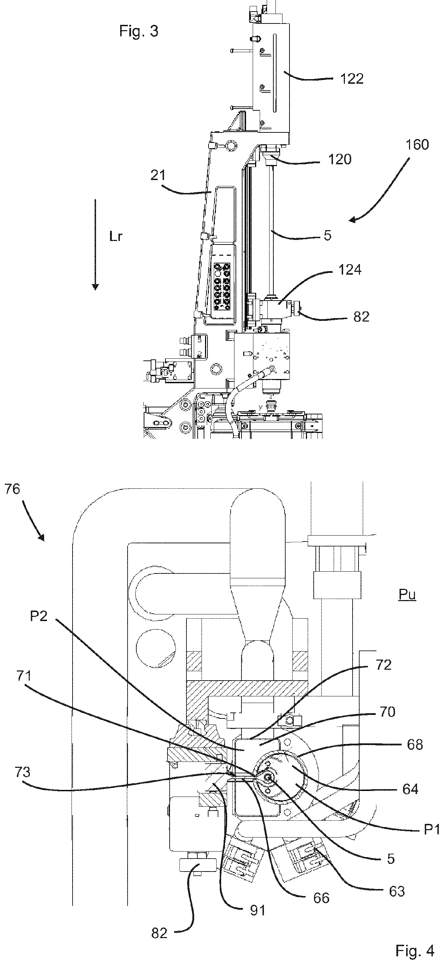

Figur 3 zeigt eine Seitenansicht einer Reckeinheit 160 nach dem internen Stand der Technik der Anmelderin. Diese Reckeinheit 160 weist dabei einen Träger 21 auf, an dem ein Reckschlitten 120 angeordnet ist. Mit diesem Reckschlitten wird wiederum eine Reckstange 5 geführt. Das Bezugszeichen 124 kennzeichnet einen Blasschlitten, d.h. einen Schlitten, der eine Blasdüse auf die Kunststoffvorformlinge aufsetzt. Das Bezugszeichen 82 kennzeichnet eine Führungsrolle, die beispielsweise gegenüber einer Führungskurve abrollen kann um so die Bewegung des Blasschlittens zu erreichen. Das Bezugszeichen 122 kennzeichnet eine Antriebseinrichtung, wie einen Linearmotor, der die Reckstangenbewegung antreibt. Anstelle des Linearmotors könnte jedoch auch ein pneumatischer oder hydraulischer Antrieb vorgesehen sein oder ebenfalls eine Reckkurve.

Das Bezugszeichen Lr in den Figuren bezieht sich auf die Bewegungsrichtung der Reckstange zum Recken der Kunststoffvorformlinge. Diese Bewegungsrichtung stimmt mit der Bewegungsrichtung der Beaufschlagungseinrichtung und vorteilhaft auch mit der Längsrichtung der Kunststoffvorformlinge überein.

Figur 4 zeigt eine Draufsicht auf eine erfindungsgemäße Reckeinheit 60. Dabei ist wiederum die Reckstange 5 erkennbar, die sich in Fig. 4 senkrecht zu der Figurenebene bewegt um die Kunststoffvorformlinge (nicht gezeigt) zu dehnen. Diese Reckstange 5 bewegt sich innerhalb eines Aufnahmeraums 64, der hier zylinderförmig ausgebildet ist. Weiterhin weist dieser Aufnahmeraum 64 einen Öffnungsschlitz auf, durch welchen hindurch eine Halteeinrichtung 66 beziehungsweise ein die Reckstange 5 haltendes Schwert geführt wird. Innerhalb dieses Aufnahmeraums 64 herrscht ein Druck P1, der zumindest größer ist als ein Druck Pu, der unsterilen Umgebung außerhalb.

Das Bezugszeichen 70 kennzeichnet einen Übergangsraum durch den hindurch ebenfalls die Halteeinrichtung 66 geführt wird. Weiterhin steht dieser Übergangsraum in Strömungsverbindung mit dem Aufnahmeraum 64. In diesem Übergangsraum herrscht ein Druck P2, der geringer ist als der Druck P1, sodass Luftströmung lediglich von dem Aufnahmeraum 64 in den Übergangsraum 70 gelangen kann. Das Bezugszeichen 72 kennzeichnet eine Wandung, die einen Übergangsraum 70 abgrenzt. Entsprechend kennzeichnet das Bezugszeichen 68 eine Wandung, welche den Aufnahmeraum 64 abgrenzt. Über eine Abführeinrichtung 76, welche in Strömungsverbindung mit dem Übergangsraum 70 steht, kann das gasförmige Medium aus dem Übergangsraum 70 abgeführt werden. Dies ist insbesondere für Sterilisationsprozesse relevant.

Das Bezugszeichen 91 kennzeichnet einen Reckschlitten, an dem wiederum die Halteeinrichtung 66 und die Reckstange 5 angeordnet ist, um so eine Bewegung zu ermöglichen. Das Bezugszeichen 82 kennzeichnet wiederum eine Kurvenrolle, die zum Bewegen der Blaseinheit dient.

Die Bezugszeichen 63 beziehen sich auf Ventileinheiten zum Zuführen der Blasluft.

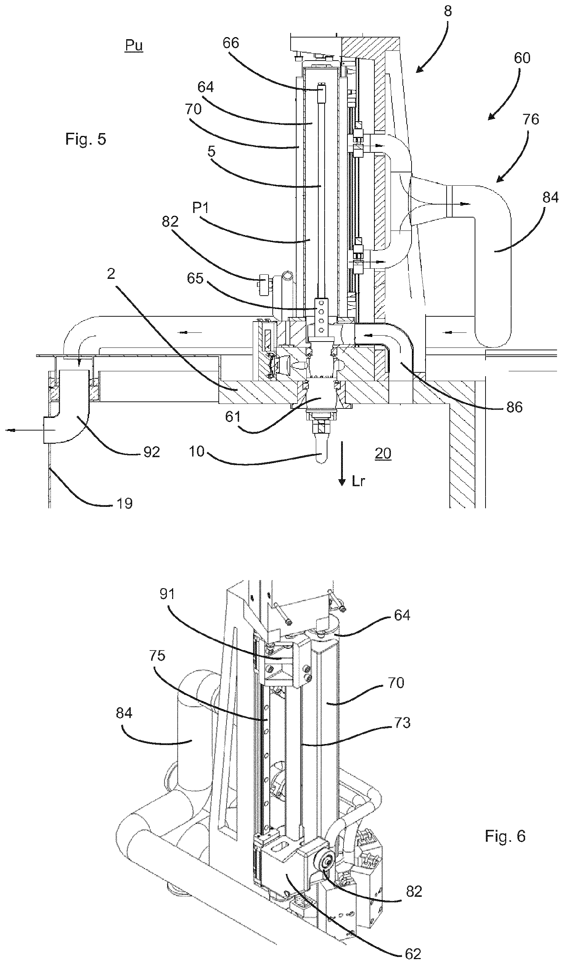

Figur 5 zeigt eine weitere Darstellung der Reckeinheit 60 wobei insbesondere die Strömungswege der Luft illustriert werden. Die in den Aufnahmeraum 64 einströmende Luft resultiert aus der Atmosphäre unterhalb der Blasstation 8. Die Abgrenzung zur Umwelt wird von einer stehenden Abdeckung gewährleistet. Die sterile Luft umspült innerhalb des Aufnahmeraums 64 die vollständige Reckstange sowie auch die Halteeinrichtung 66 (in Figur 5 nicht gezeigt) und auch das entsprechende Schwert des Blasschlittens, welches sich an den Körper 98 nach hinten anschließt. Das Bezugszeichen 61 kennzeichnet den Blaskolben, der an den Kunststoffvorformlingen 10 angesetzt wird. Das Bezugszeichen 20 kennzeichnet einen Reinraum. Das Bezugszeichen 19 kennzeichnet auch hier wieder eine stehende Abdichtung. Das Bezugszeichen 2, das drehende Blasrad.

Über eine Verbindungsleitung 86 gelangt die Luft von dem Reinraum 20 in den Aufnahmeraum 64. Über die beiden Öffnungen 71 und 73 (vergleiche Fig. 4) kann die kontaminierte Luft durch die angebundene Absaugung 76 angesaugt werden. Es gelangt daher keine unsterile beziehungsweise verschmutzte Luft ins System und umgekehrt im Sterilisationsprozess kein Wasserstoffperoxid aus dem System in die Umwelt. Die hier beschriebenen Vorgänge laufen, wie oben erwähnt, in der rotierenden Einheit. Abgesaugt werden kann über eine stehende Einheit. Für die Verbindung zwischen dem stehenden und dem bewegten Teil kann ein sogenanntes Wasserschloss als Dichtungseinrichtung vorgesehen sein. Das Bezugszeichen 84 bezieht sich auf eine Absaugleitung, die Bestandteil der Absaugeinrichtung 76 ist. Für die Abführleitung 92 wird schmutzige Luft aus der Vorrichtung 1 abgesaugt.

Figur 6 zeigt eine perspektivische Darstellung einer erfindungsgemäßen Reckeinheit 60. Dabei sind wieder der Aufnahmeraum 64 sowie der Übergangsraum 70 erkennbar. Auch erkennt man die Abführeinrichtung beziehungsweise Leitung 76, über die aus dem Übergangsraum Luft abgesaugt werden kann. Man erkennt, dass es sowohl der Schlitten 91 für die Reckstangenbewegung als auch der Schlitten 62 für die Blasdüsenbewegung von dem gleichen Träger 75 geführt werden. Daher ist hier der Schlitten 62 stets unterhalb des Schlittens 91 angeordnet.

Bei der in Figur 6 gezeigten Darstellung erkennt man, dass der Träger 75 und die Öffnung 73 quer zueinander ausgerichtet sind, d.h. bei dem Schlitten 91 und auch dem Schlitten 62 handelt es sich um ein Winkelteil.

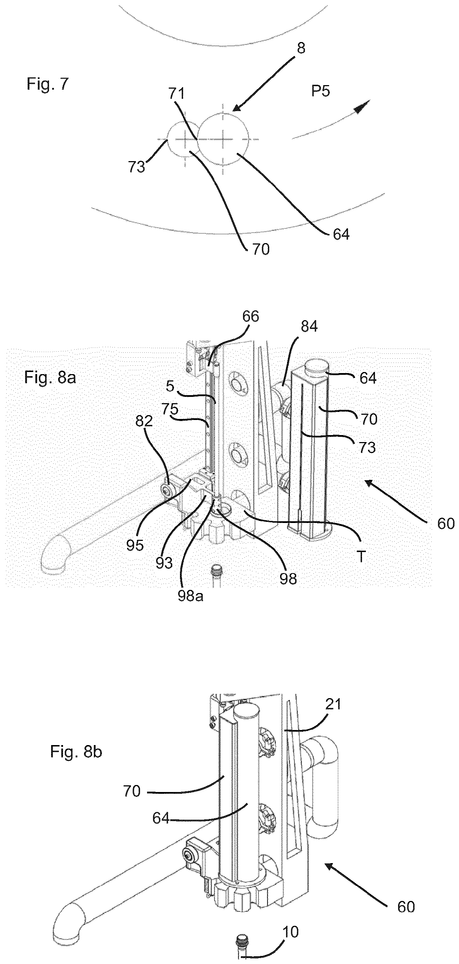

Figur 7 zeigt eine grob schematische Darstellung der erfindungsgemäßen Vorrichtung. Dabei kennzeichnet der Pfeil P5 die Bewegungsrichtung der einzelnen Blasstationen 8.

Weiterhin sind auch die beiden Schlitze beziehungsweise Öffnungen 71 und 73 des Aufnahmeraums 64 und des Übergangsraums 70 erkennbar. Man erkennt, dass diese Schlitze in der Bewegungsrichtung P5 jeweils entgegen der Bewegungsrichtung weisen.

Die Figuren 8a und 8b zeigen zwei Darstellungen der Reckstation, wobei in einer Darstellung (vergl. Fig. 8a) zur Veranschaulichung der Aufnahmeraum 64 und der Übergangsraum 70 getrennt von der Reckstange 5 dargestellt sind. In Fig. 8a erkennt man insbesondere wieder den Öffnungsschlitz 73, gegenüber dem die Halteeinrichtung 66 mit der Reckstange 5 bewegt wird.

Das Bezugszeichen 75 kennzeichnet einen Träger gegenüber dem der gesamte Schlitten mit der Halteeinrichtung 66 gleitet. Das Bezugszeichen 62 kennzeichnet den Schlitten für die Blaseinheit, der ebenfalls gegenüber dem Träger 75 gleitet. Das Bezugszeichen 98 kennzeichnet einerseits einen Führungskörper für die Reckstange 5, der jedoch eine Vielzahl von Öffnungen 98a aufweist, über welche ein Sterilisationsmittel in den Aufnahmeraum 64 geführt werden kann.

Figur 8b zeigt eine geschlossene Darstellung der erfindungsgemäßen Vorrichtung, wobei hier wiederum der Aufnahmeraum 64 und der Übergangraum 70 erkennbar sind.

Das Bezugszeichen T kennzeichnet in den jeweiligen Figuren jeweils die Trennebene zwischen dem unsterilen und dem sterilen Raum.

Vorzugsweise liegt die Atmosphäre innerhalb des Aufnahmeraums 64 um ca. 10 Pa höher als der Umgebungsdruck. Dabei wird vorteilhaft diese Atmosphäre innerhalb des Aufnahmeraums mit steriler Luft versorgt.

Der Druck innerhalb des Übergangsraums 70 liegt wie oben erwähnt unterhalb des Drucks innerhalb des Aufnahmeraums und vorteilhaft auch unterhalb des Umgebungsdrucks. Vorzugsweise liegt der Druck innerhalb des Übergangsraums bei ca. 5 Pascal unterhalb des Umgebungsdrucks.

Die einzelnen Antriebseinrichtungen für die Reckstange und/oder die Antriebseinrichtungen für die Blasdüsen und/oder Blaskolbenhebeeinrichtung liegen vorteilhaft außerhalb der Atmosphäre beziehungsweise außerhalb des Aufnahmeraums 64 und besonders bevorzugt auch außerhalb des Übergangsraums.

Man erkennt insbesondere an den Figuren, dass die Aufnahmeräume durch jeweils Kammern beziehungsweise Wände gegeneinander begrenzt werden.

Aus den einzelnen Druckverhältnissen ergibt sich, dass eine Strömung von dem Aufnahmeraum 64 in den Übergangsraum 70 und auch umgekehrt eine Strömung von der Umgebung in den Übergangsraum 70 stattfinden kann. Weiterhin ist es denkbar, dass eine Verbindung zwischen dem Aufnahmeraum 64 und der darunter angeordneten Atmosphäre besteht, d.h. insbesondere dem Reinraum, der hier ebenfalls vorteilhaft unter einem erhöhten Druck von bevorzugt ca. 10 Pa liegt.

Weiterhin ist es vorteilhaft auch möglich, dass die Reckstange 5 über die Halteeinrichtung 66 in einer horizontalen Ebene verstellt werden kann. Bei einer weiteren vorteilhaften Ausführungsform ist es auch möglich, dass der Aufnahmeraum 64 beziehungsweise die Absaugorgel abnehmbar ist, ohne hierzu die Reckeinheit selbst beziehungsweise die Reckstange 5 abzunehmen (vergl. Fig. 8a). Wie insbesondere in Bezug auf Fig. 7 verdeutlicht, sind auch die einzelnen Schlitze beziehungsweise Öffnungen 71, 73 bevorzugt entgegen der Laufrichtung des Prozesses ausgerichtet.

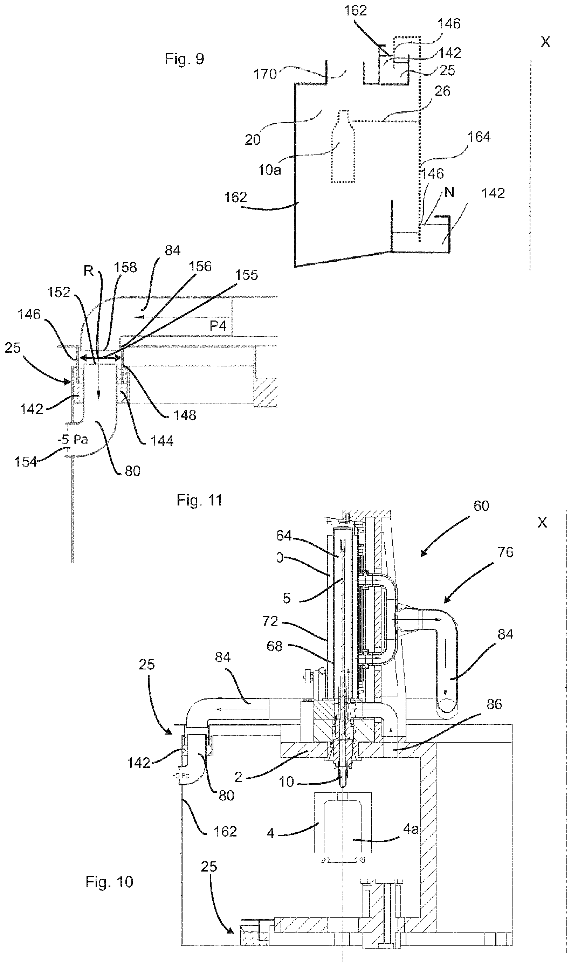

Figur 9 zeigt eine schematische Darstellung zur Veranschaulichung einer Dichtungseinrichtung. Gezeigt ist hier ein Gehäuseteil 162, der stehend angeordnet ist. Ein weiterer Gehäuseteil 164, der gemeinsam mit dem Gehäuseteil 162 bzw. der Wandung 162 den Reinraum 20 abgrenzt, ist demgegenüber drehbeweglich angeordnet. An diesem drehbeweglichen Wandabschnitt 164 ist auch ein Träger 26 mit der (nicht gezeigten) Blasstation vorgesehen.

In den Sterilraum 20 wird über eine Einführöffnung 170 ein steriles Gas eingeführt. Um die drehenden Komponenten gegenüber den stehenden Komponenten abzudichten, sind hier zwei Kanäle 142 vorgesehen, die vorteilhaft jeweils mit einer bakteriostatischen Lösung oder beispielsweise mit Wasser befüllt sind. Ein Wandabschnitt 146 ragt dabei sowohl in das untere Behältnis bzw. den unteren Kanal 142, als auch in den oberen Kanal 142, und zwar derart, dass diese Wand 146 auch in die jeweilige Flüssigkeit eintaucht. Durch das Eintauchen dieser Wand 146 in die beiden Kanäle 142 wird insgesamt der Reinraum 20 abgedichtet. Das Bezugszeichen N bezieht sich auf einen Füllstand der Flüssigkeit im Inneren des Kanals. Da in dem Reinraum 20 ein Überdruck herrscht, ist jeweils auf der dem Reinraum zugewandten Seite des Kanals 142 ein geringerer Füllstand als auf der Umgebung zugewandten Seite des Kanals 142.

Figur 10 zeigt eine weitere Darstellung einer erfindungsgemäßen Vorrichtung 1. Diese Darstellung ähnelt dabei der in Figur 5 gezeigten Darstellung. Zusätzlich ist jedoch auch eine Blasform 4 erkennbar, die in ihrem Inneren den Hohlraum 4a ausbildet, innerhalb dessen die Kunststoffvorformlinge 10 durch Beaufschlagung mit Druckluft expandiert werden. Auch ist wiederum die Absaugleitung 84 dargestellt. Das Bezugszeichen 25 kennzeichnet auch hierbei die beiden Dichtungseinrichtungen, wobei erkennbar ist, dass sich eine Leitung 80 durch die Dichtungseinrichtung 25, bzw. durch den Kanal 142 hindurch erstreckt. Diese Leitung 80 kann dabei rohrartig ausgebildet sein und nur an einer Stelle des Kanals 142 angeordnet sein. Es wäre jedoch auch möglich, dass die Leitung 80 durch zwei Wandungen gebildet wird und somit sich ebenfalls vollständig in der Umfangsrichtung bezüglich der Drehachse X erstreckt.

Figur 11 zeigt eine vergrößerte Darstellung des Abschnitts der Dichtungseinrichtung 25. Man erkennt wiederum die Leitung 80, die sich durch den Kanal 142 bzw. Kanalabschnitte 142, 144 erstreckt. Das Bezugszeichen 146 kennzeichnet wiederum den Wandabschnitt, der in die Trennflüssigkeit eintaucht. Das Bezugszeichen 148 kennzeichnet einen weiteren Wandabschnitt, der ebenfalls in die Trennflüssigkeit eintaucht. Das Rohr 80 verläuft in der radialen Richtung R zwischen diesen beiden Wandabschnitten 146 und 148. Damit ist der Raumbereich 155, der zwischen einer Öffnung 152 der Leitung 80 und einer Öffnung 158 der Leitung 84 gebildet wird, ebenfalls sowohl gegenüber der Umgebung abgetrennt als auch gegenüber dem Reinraum abgetrennt.

Wie durch den Pfeil P4 erkennbar, strömt das gasförmige Medium bzw. die Luft hier in Richtung der Öffnung 154. Die Leitung 80 ist damit vorteilhaft gemeinsam mit dem Kanal 142 stehend ausgebildet, wohingegen die Absaugleitung 84 mit der Öffnung 158 drehbeweglich ausgebildet ist. Das Bezugszeichen 156 kennzeichnet einen Träger, an dem die Absaugleitung 84 fest und insbesondere auch gasdicht angeordnet ist.

Damit ist hier die aseptische Blasstation auf dem rotierenden Karussell montiert und ein durch die Lüftungstechnik resultierender Kreislauf in der Reckeinheit 60 bedingt eine Absaugung von dem rotierenden Teil, auf dem die Blasstation angeordnet ist, auf das stehende Teil.

Wie oben erwähnt befinden sich üblicherweise mehrere Blasstationen auf einem rotierenden Karussell. Das Blasrad 2 dreht sich um die Drehachse X und ist dabei abgeriegelt gegen die Atmosphäre durch die beschriebenen Wandungen. Diese Wandung weist dabei auch eine Führung für eine Flüssigkeit, d.h. die Kanäle 142 und 144 auf. Der Abstand dieser beiden Wandabschnitte in der radialen Richtung R ist so gewählt, dass das erwähnte Absaugrohr 80 dazwischen eingestülpt werden kann. Das Ende, bzw. die Öffnung, der Leitung 80 berührt dabei nicht die abdichtende Flüssigkeit und läuft in einem definierten Abstand. Das Ende der besagten Absaugung ragt so aus der Dichtflüssigkeit heraus, so dass Luft abgesaugt werden kann. Durch die Absaugung entsteht ein Unterdruck von 5 Pa im Wasserschloss. Dieser Unterdruck saugt kontaminierte Luft über das Absaugrohr 80 und die Leitung 80 aus dem System.

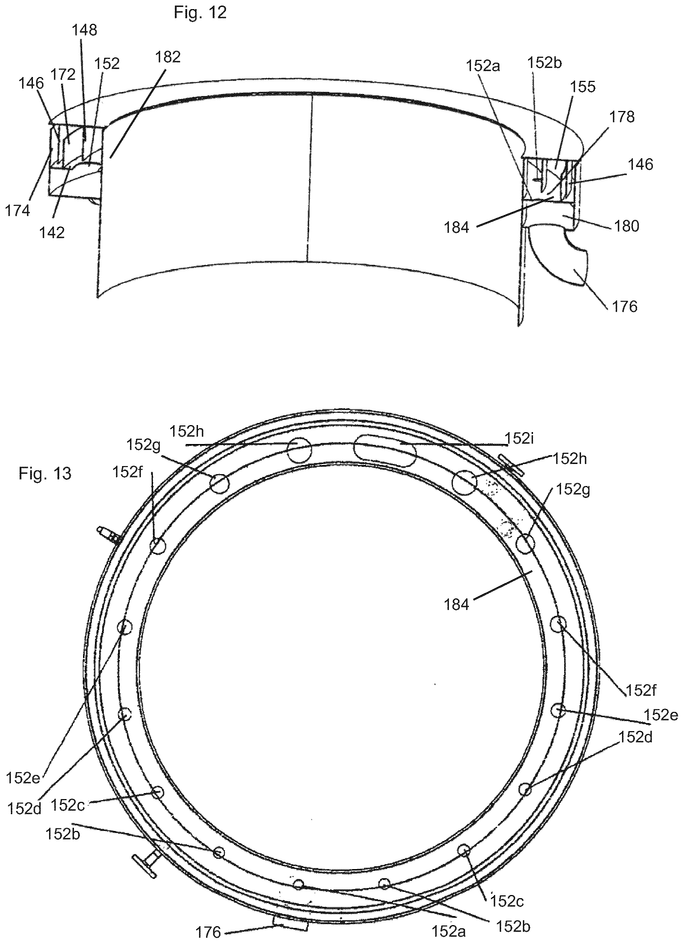

Fig. 12 zeigt eine weitere Ausführungsform einer erfindungsgemäßen Vorrichtung. Hier ist unterhalb des Ringkanals ein Sammel- bzw. Verteilkanal 180 für das fließfähige Medium vorgesehen, der mittels einer Vielzahl von Öffnungen 152, 152a - 152i (vgl. Fig. 13) in Strömungsverbindung mit dem Ringkanal steht. Die Leitung für das fließfähige Medium innerhalb des Kanals 142 wird hier durch die Wandungen 172 und 182 gebildet. Das Bezugszeichen 174 kennzeichnet eine Aussenwandung des Kanals 142. Über eine zentrale Leitung 176 kann das fließfähige Medium zugeführt bzw. abgeführt werden. Das Bezugszeichen 184 kennzeichnet einen Boden des Kanals 142. Die Absaugleitung 84 bzw. deren Verbindung zu dem Kanal 142 ist hier nicht dargestellt. Daneben wäre es auch möglich, dass in den Sammel- bzw. Verteilkanal ausgehend von dem Kanal 142 Schläuche (ggfs. mit unterschiedlichen Querschnitten) münden. Auch die Leitungen 80 können als (ggfs. flexible) Schläuche ausgebildet sein.

Fig. 13 zeigt eine Draufsicht auf die in Fig. 12 gezeigte Vorrichtung. Man erkennt, dass hier eine Vielzahl von Öffnungen 152a, 152b, 152i vorgesehen ist, wobei diese Öffnungen in der Umfangsrichtung verteilt sind. Ein Öffnungsquerschnitt dieser Öffnungen nimmt dabei von der Öffnung 152a, in deren Bereich sich auch die Leitung 176 befindet, hin zu der Öffnung 152i, die hier den maximalen Abstand zu der Leitung 176 aufweist, zu. Der Boden 184 ist hier symmetrisch bezüglich einer Achse, welche jeweils mittig durch die beiden Öffnungen 152a und 152i verläuft. An die besagten Öffnungen können sich auch Rohre anschließen, welche in den Kanal 142 hineinragen.

### Bezugszeichenliste

- 1: Umformungsvorrichtung
- 2: Transportrad
- 4: Blasform
- 4a: Hohlraum
- 5: Reckstange
- 6: Blasformträger
- 8: Blas-/Umformungsstationen
- 9: Führungskurve
- 10: Kunststoffvorformlinge
- 10a: Behältnisse
- 11: Folgeeinrichtung
- 12: Schlitten, Beaufschlagungseinrichtung
- 13: Boden
- 14: Faltenbalg
- 17: Deckel
- 18: weitere Wandung
- 19: Seitenwand
- 20: Reinraum
- 21: Halterung für Schlitten
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage zum Herstellen von Kunststoffbehältnissen
- 55: Sterilisationseinrichtung
- 60: Reckeinheit
- 61: Blaskolben
- 62: Schlitten für Blasdüsenbewegung
- 63: Ventileinheit
- 64: Aufnahmeraum
- 66: Halteeinrichtung, Schwert
- 68: Wandung
- 70: Übergangsraum
- 71: Öffnung (Öffnungsschlitz) des Aufnahmeraums 64
- 72: Wandung des Übergangsraums
- 73: Öffnung (Öffnungsschlitz) des Übergangsraums
- 75: Träger
- 76: Abführeinrichtung
- 80: Leitung
- 82: Führungsrolle
- 84: Absaugleitung
- 91: Schlitten für Reckstangenbewegung
- 92: Abführleitung
- 98: Körper
- 120: Reckschlitten
- 122: Antriebseinrichtung
- 124: Blasschlitten
- 142: Kanäle / Behältnis
- 144: Kanalabschnitt
- 146: Wandabschnitt
- 148: weiterer Wandabschnitt
- 152: Öffnung
- 152a-i: Öffnungen
- 154: weitere Öffnung
- 155: Raumbereich
- 156: Träger
- 158: weitere Öffnung
- 160: Reckeinheit
- 162: Gehäuseteil / Wandung
- 164: weiterer Gehäuseteil
- 170: Einführöffnung
- 172: Wandung
- 174: Aussenwandung
- 176: Leitung
- 180: Sammel- bzw. Verteilkanal
- 182: Wandung
- 184: Boden

- L: punktierte Linie
- Lr: Bewegungsrichtung der Reckstange 5
- N: Füllstand der Flüssigkeit
- U: unsterile Umgebung
- X: Drehachse
- P1: Druck im Aufnahmeraum
- P2: Druck im Übergangsraum
- P4: Pfeil
- P5: Bewegungsrichtung der Blasstationen
- Pu: Druck in der (unsterilen) Umgebung
- R: radiale Richtung
- T: Trennebene

## Patentansprüche

1. Vorrichtung zum Umformen von Kunststoffvorformlingen (10) zu Kunststoffbehältnissen (10a) mit wenigstens einer Blasstation (8), welche an einer um eine vorgegebene Drehachse (D) drehbaren Transporteinrichtung (2) angeordnet ist, wobei die Blasstation (8) eine Blasform aufweist und diese Blasform einen Hohlraum ausbildet, in dessen Innerem die Kunststoffvorformlinge (10) durch Beaufschlagung mit einem gasförmigen Medium zu den Kunststoffbehältnissen (10a) expandierbar sind, mit einer Beaufschlagungseinrichtung, welche die Kunststoffvorformlinge (10) zu deren Expansion mit dem gasförmigen Medium beaufschlagt und mit einem Reinraum (20), der die Blasstation (8) zumindest teilweise umgibt, wobei dieser Reinraum (20) mittels wenigstens zweier Wandungen (18, 19, 162, 164), welche relativ zueinander beweglich sind, gegenüber einer Umgebung abgegrenzt ist, und die Vorrichtung eine Dichtungseinrichtung (25) aufweist, welche den Reinraum in einem Bereich der relativ zueinander beweglichen Wandungen (18, 19, 162, 164) gegenüber der Umgebung abgrenzt, wobei die Dichtungseinrichtung (25) einen ersten umlaufenden mit einem flüssigen Medium befüllbaren Kanal (142) aufweist, sowie einen gegenüber diesem Kanal (142) bewegbaren ersten umlaufenden Wandungskörper (146), der zumindest abschnittsweise innerhalb des flüssigen Mediums führbar ist
**dadurch gekennzeichnet, dass**
sich in wenigstens einem Abschnitt des Kanals (142) eine Leitung (80) für ein fließfähiges Medium erstreckt, wobei dieses fließfähige Medium durch diesen Abschnitt des Kanals (142) führbar ist und permanent von dem in dem Kanal befindlichen flüssigen Medium getrennt ist, und wobei die Vorrichtung einen zweiten gegenüber dem Kanal (142) bewegbaren Wandungskörper (148) aufweist, der von dem ersten Wandungskörper in einer bezüglich der Drehachse (D) radialen Richtung (R) beabstandet ist und der zumindest abschnittsweise innerhalb des flüssigen Mediums führbar ist.

2. Vorrichtung nach Anspruch 1,
**dadurch gekennzeichnet, dass**
die Leitung für das fließfähige Medium wenigstens abschnittsweise in der bezüglich der Drehachse radialen Richtung zwischen dem ersten Wandungskörper (146) und dem zweiten Wandungskörper (148) verläuft.

3. Vorrichtung nach zumindest einem der vorhergehenden Ansprüche,
**dadurch gekennzeichnet, dass**
die Leitung (80) in einen Ringkanal (180) mündet, aus dem das gasförmige Medium abgesaugt wird.

4. Vorrichtung nach zumindest einem der vorhergehenden Ansprüche,
**dadurch gekennzeichnet, dass**
sich in dem Kanal (142) mindestens zwei Öffnungen (152a, 152b) befinden, die zueinander unterschiedlich große Querschnitte (R) aufweisen.

5. Vorrichtung nach zumindest einem der vorhergehenden Ansprüche,
**dadurch gekennzeichnet, dass**
die Leitung (80) eine Öffnung (152) aufweist und diese Öffnung (152) in einem Arbeitsbetrieb der Vorrichtung (1) permanent oberhalb eines Füllstands (N) des flüssigen Mediums angeordnet ist.

6. Vorrichtung (1) nach zumindest einem der vorhergehenden Ansprüche,
**dadurch gekennzeichnet, dass**
die Leitung (80) zur Absaugung eines gasförmigen Mediums aus einem Bereich der Vorrichtung (1) dient.

7. Vorrichtung (1) nach zumindest einem der vorhergehenden Ansprüche,
**dadurch gekennzeichnet, dass**
die Vorrichtung eine Reckeinheit (60) aufweist, welche die Kunststoffvorformlinge (10) entlang deren Längsrichtung (Lr) dehnt, wobei die Reckeinheit (60) eine gegenüber den Kunststoffvorformlingen (10) bewegbare Reckstange (5) aufweist, die in die Kunststoffvorformlinge (10) einführbar ist und die Reckeinheit (60) weiterhin eine Antriebseinrichtung (122) zum Bewegen der Reckstange (5) entlang deren Längsrichtung (Lr) aufweist.

8. Vorrichtung (1) nach Anspruch 7,
**dadurch gekennzeichnet, dass**
die Blasstation (8) einen Aufnahmeraum (64) mit wenigstens einer Wandung (64a) zum Aufnehmen der Reckstange (5) aufweist und die Reckstange (5) gegenüber diesem Aufnahmeraum (64) beweglich ist und die Antriebseinrichtung (62) vorteilhaft wenigstens zeitweise außerhalb dieses Aufnahmeraums (64) angeordnet ist, und wobei in diesem Aufnahmeraum (64) ein gasförmiges Medium mit einem Druck (P1) aufnehmbar ist, der oberhalb eines Umgebungsdrucks (Pu) einer unsterilen Umgebung dieses Aufnahmeraums (64) liegt.

9. Vorrichtung (1) nach Anspruch 8,
**dadurch gekennzeichnet, dass**
der Aufnahmeraum (64) in Strömungsverbindung mit der Leitung (80) für das fließförmige Medium steht.

10. Vorrichtung (1) nach wenigstens einem der vorangegangenen Ansprüche,
**dadurch gekennzeichnet, dass**
die Vorrichtung einen mittels wenigstens einer Wandung (72) gegenüber der Umgebung (U) abgetrennten Übergangsraum (70) aufweist, wobei dieser Übergangsraum (70) in Strömungsverbindung mit dem Aufnahmeraum (64) steht.

11. Vorrichtung (1) nach Anspruch 2,
**dadurch gekennzeichnet, dass**
die Vorrichtung (1) eine Absaugeinrichtung (76) aufweist, um ein gasförmiges Medium aus dem Übergangsraum (70) abzusaugen.

12. Verfahren zum Umformen von Kunststoffvorformlingen (10) zu Kunststoffbehältnissen (10a) mittels einer Vorrichtung gemäß zumindest einem der vorhergehenden Ansprüche, wobei die Kunststoffvorformlinge (10) mit wenigstens einer Blasstation (8), welche an einer beweglichen Transporteinrichtung (2) angeordnet ist durch einen Reinraum (20) transportiert werden und wenigstens zeitweise während dieses Transports mit einem gasförmigen Medium zu deren Expansion beaufschlagt werden und dieser Reinraum mittels wenigstens zwei zueinander relativbeweglichen Wandungen gegenüber einer Umgebung abgetrennt ist, wobei mittels einer Dichtungseinrichtung der Reinraum in einem Bereich der relativ zueinander beweglichen Wandungen gegenüber der Umgebung abgrenzt wird, und die Dichtungseinrichtung einen ersten umlaufenden mit einem flüssigen Medium befüllten Kanal (142) aufweist, in dem ein gegenüber diesem Kanal (142) bewegbarer erster umlaufenden Wandungskörper (146), zumindest abschnittsweise innerhalb des flüssigen Mediums geführt wird, wobei sich in wenigstens einem Abschnitt des Kanals (72) eine Leitung (80) für ein fließfähiges Medium erstreckt, wobei dieses fließfähige Medium durch diesen Abschnitt des Kanals geführt ist und permanent von dem in dem Kanal befindlichen flüssigen Medium getrennt wird.

## Claims

1. An apparatus for the shaping of plastics material preforms (10) into plastics material containers (10a) with at least one blow moulding station (8) which is arranged on a conveying device (2) rotatable about a preset axis of rotation (D), wherein the blow moulding station (8) has a blow mould and this blow mould forms a cavity in the interior of which the plastics material preforms (10) are capable of being expanded by being acted upon with a gaseous medium to form the plastics material containers (10a), with a stressing device, which acts upon the plastics material preforms (10) with the gaseous medium in order to expand them, and with a clean room (20), which surrounds the blow moulding station (8) at least in part, wherein this clean room (20) is bounded off from an environment by means of at least two walls (18, 19, 162, 164) which are movable relative to one another, and the apparatus has a sealing device (25) which bounds off from the environment the clean room in a region of the walls (18, 19, 162, 164) movable relative to one another, wherein the sealing device (25) has a first continuous duct (142), which is capable of being filled with a liquid medium, as well as a first continuous wall member (146) which is movable with respect to this duct (142) and which is capable of being guided at least locally inside the liquid medium,
**characterized in that**
a line (80) for a flowable medium extends in at least a portion of the duct (142), wherein this flowable medium is capable of being conveyed through this portion of the duct (142) and is permanently separated from the liquid medium present in the duct, and wherein the apparatus has a second wall member (148) which is movable with respect to the duct (142) and which is arranged at a distance from the first wall member in a radial direction (R) with respect to the axis of rotation (D) an which is capable of being guided at least locally inside the liquid medium.

2. An apparatus according to claim 1,
**characterized in that**
the line for the flowable medium extends at least locally between the first wall member (146) and the second wall member (148) in the radial direction with respect to the axis of rotation.

3. An apparatus according to at least one of the preceding claims,
**characterized in that**
the line (80) opens into an annular duct (180) out of which the gaseous medium is drawn.

4. An apparatus according to at least one of the preceding claims,
**characterized in that**
at least two openings (152a, 152b) which have cross-sections (R) differing from each other in size are provided in the duct (142).

5. An apparatus according to at least one of the preceding claims,
**characterized in that**
the line (80) has an opening (152) and this opening (152) is situated permanently above a filling level (N) of the liquid medium in working operation of the apparatus (1).

6. An apparatus (1) according to at least one of the preceding claims,
**characterized in that**
the line (80) is used for drawing a gaseous medium out of a region of the apparatus (1).

7. An apparatus (1) according to at least one of the preceding claims,
**characterized in that**
the apparatus has a stretching unit (60) which stretches the plastics material preforms (10) along their longitudinal direction (Lr), wherein the stretching unit (60) has a stretch bar (5) which is movable with respect to the plastics material preforms (10), which is capable of being introduced into the plastics material preforms (10), and the stretching unit (60) additionally has a drive device (122) for moving the stretch bar (5) along the longitudinal direction (Lr) thereof.

8. An apparatus (1) according to claim 7,
**characterized in that**
the blow moulding station (8) has a receiving space (64) with at least one wall (64a) for receiving the stretch bar (5), and the stretch bar (5) is movable with respect to this receiving space (64), and the drive device (62) is advantageously arranged outside this receiving space (64) at least for a time, and wherein a gaseous medium at a pressure (P1) which is above an ambient pressure (Pu) in a nonsterile environment of this receiving space (64) is capable of being received in this receiving space (64).

9. An apparatus (1) according to claim 8,
**characterized in that**
the receiving space (64) is connected in terms of flow to the line (80) for the flowable medium.

10. An apparatus (1) according to at least one of the preceding claims,
**characterized in that**
the apparatus has a transition space (70) which is separated from the environment (U) by means of at least one wall (72), wherein this transition space (70) is connected in terms of flow to the receiving space (64).

11. An apparatus (1) according to claim 2,
**characterized in that**
the apparatus (1) has an extraction device (76) in order to draw a gaseous medium out of the transition space (70).

12. A method of shaping plastics material preforms (10) into plastics material containers (10a) by means of an apparatus according to at least one of the preceding claims, wherein the plastics material preforms (10) are conveyed with at least one blow moulding station (8), which is arranged on a movable conveying device (2), through a clean room (20) and are acted upon with a gaseous medium at least for a time during this conveying in order to expand them, and this clean room is separated from an environment by means of at least two walls movable relative to each other, wherein the clean room is bounded off with respect to the environment by means of a sealing device into a region of the walls movable with respect to each other, and the sealing device has a first continuous duct (142) which is filled with a liquid medium and in which a first continuous wall member (146) movable with respect to this duct (142) is guided at least locally inside the liquid medium,
wherein
a line (80) for a flowable medium extends in at least a portion of the duct (72), wherein this flowable medium is conveyed through this portion of the duct and is permanently separated from the liquid medium present in the duct.

## Revendications

1. Dispositif de transformation d'ébauches en matière synthétique (10) pour devenir des conteneurs en plastique (10a) avec au moins une station de soufflage (8), qui est agencée au niveau d'un dispositif de transport (2) rotatif autour d'un axe de rotation (D) prédéfini, dans lequel la station de soufflage (8) présente un moule de soufflage et ce moule de soufflage forme une cavité, à l'intérieur de laquelle les ébauches en matière synthétique (10) sont expansibles par application d'un agent gazeux pour devenir des conteneurs en plastique (10a), avec un dispositif d'application, qui applique l'agent gazeux sur les ébauches en matière synthétique (10) pour leur expansion et avec une salle blanche (20), qui entoure au moins en partie la station de moulage (8), dans lequel cette salle blanche (20) est délimitée par rapport à un environnement au moyen d'au moins deux parois (18, 19, 162, 164), qui sont mobiles l'une par rapport à l'autre, et le dispositif présente un dispositif d'étanchéité (25), qui délimite la salle blanche dans une zone des parois (18, 19, 162, 164) mobiles l'une par rapport à l'autre par rapport à l'environnement, dans lequel le dispositif d'étanchéité (25) présente un premier canal (142) périphérique pouvant être rempli avec un agent fluide, ainsi qu'un premier corps de paroi périphérique (146) mobile par rapport à ce canal (142), qui peut être guidé au moins par section à l'intérieur de l'agent fluide,
**caractérisé en ce que**
une conduite (80) pour un agent coulant s'étend dans au moins une section du canal (142), dans lequel cet agent coulant peut être guidé par cette section du canal (142) et est séparé de façon permanente de l'agent fluide se trouvant dans le canal, et dans lequel le dispositif présente un deuxième corps de paroi (148) mobile par rapport au canal (142), qui est espacé du premier corps de paroi dans une direction radiale (R) par rapport à l'axe de rotation (D) et peut être guidé au moins par section à l'intérieur de l'agent fluide.

2. Dispositif selon la revendication 1,
**caractérisé en ce que**
la conduite pour l'agent coulant s'étend au moins par section dans la direction radiale par rapport à l'axe de rotation entre le premier corps de paroi (146) et le deuxième corps de paroi (148).

3. Dispositif selon au moins l'une quelconque des revendications précédentes,
**caractérisé en ce que**
la conduite (80) débouche dans un canal annulaire (180), duquel l'agent gazeux est aspiré.

4. Dispositif selon au moins l'une quelconque des revendications précédentes,
**caractérisé en ce que**
au moins deux ouvertures (152a, 152b), qui présentent des sections transversales (R) de taille différente l'une de l'autre, se trouvent dans le canal (142).

5. Dispositif selon au moins l'une quelconque des revendications précédentes,
**caractérisé en ce que**
la conduite (80) présente une ouverture (152) et cette ouverture (152) est agencée dans une zone de travail du dispositif (1) de manière permanente au-dessus d'un niveau de remplissage (N) de l'agent fluide.

6. Dispositif (1) selon au moins l'une quelconque des revendications précédentes,
**caractérisé en ce que**
la conduite (80) sert à aspirer un agent gazeux hors d'une zone du dispositif (1).

7. Dispositif (1) selon au moins l'une quelconque des revendications précédentes,
**caractérisé en ce que**
le dispositif présente une unité d'étirage (60), laquelle étend les ébauches en matière synthétique (10) le long de sa direction longitudinale (Lr), dans lequel l'unité d'étirage (60) présente une tige d'étirage (5) mobile par rapport aux ébauches en matière synthétique (10), qui peut être introduite dans les ébauches en matière synthétique (10) et l'unité d'étirage (60) présente en outre un dispositif d'entraînement (122) pour le déplacement de la tige d'étirage (5) le long de sa direction longitudinale (Lr).

8. Dispositif (1) selon la revendication 7,
**caractérisé en ce que**
la station de soufflage (8) présente un espace de réception (64) avec au moins une paroi (64a) pour la réception de la tige d'étirage (5) et la tige d'étirage (5) est mobile par rapport à cet espace de réception (64) et le dispositif d'entraînement (62) est agencé de manière avantageuse au moins temporairement en dehors de cet espace de réception (64), et dans lequel un agent gazeux avec une pression (P1), qui est supérieure à une pression ambiante (Pu) d'un environnement non stérile de cet espace de réception (64), peut être reçu dans cet espace de réception (64).

9. Dispositif (1) selon la revendication 8,
**caractérisé en ce que**
l'espace de réception (64) est en communication fluidique avec la conduite (80) pour l'agent de type fluide.

10. Dispositif (1) selon au moins l'une quelconque des revendications précédentes,
**caractérisé en ce que**
le dispositif présente un espace de transition (70) séparé de l'environnement (U) au moyen d'au moins une paroi (72), dans lequel cet espace de transition (70) est en communication fluidique avec l'espace de réception (64).

11. Dispositif (1) selon la revendication 2,
**caractérisé en ce que**
le dispositif (1) présente un dispositif d'aspiration (76) pour aspirer un agent gazeux de l'espace de transition (70).

12. Procédé de transformation d'ébauches en matière synthétique (10) pour devenir des conteneurs en plastique (10a) au moyen d'un dispositif selon au moins l'une quelconque des revendications précédentes, dans lequel les ébauches en matière synthétique (10) sont transportées avec au moins une station de soufflage (8), qui est agencée au niveau d'un dispositif de transport mobile (2), à travers une salle blanche (20) et un agent gazeux est appliqué au moins temporairement pendant ce transport pour leur expansion et cette salle blanche est séparée d'un environnement au moyen d'au moins deux parois mobiles l'une par rapport à l'autre, dans lequel la salle blanche est délimitée par rapport à l'environnement dans une zone des parois mobiles l'une par rapport à l'autre au moyen d'un dispositif d'étanchéité, et le dispositif d'étanchéité présente un premier canal (142) périphérique rempli avec un agent fluide, dans lequel un premier corps de paroi périphérique (146) mobile par rapport à ce canal (142) est guidé au moins par section à l'intérieur de l'agent fluide,
dans lequel
une conduite (80) pour un agent coulant s'étend dans au moins une section du canal (72), dans lequel cet agent coulant est guidé par cette section du canal et est séparé de façon permanente de l'agent fluide se trouvant dans le canal.
